# EUROPEAN PATENT APPLICATION

(11) **EP 4 723 357 A1**
(43) Date of publication of application: **08.04.2026**
(21) Application number: 25191734.0
(22) Date of filing: 25.07.2025
(51) Int. Cl.: H01M 50/536, H01M 4/66, H01M 4/04, H01M 10/04, H01M 10/058

(54) **ELECTRODE MANUFACTURING APPARATUS, ELECTRODE MANUFACTURING METHOD, AND SECONDARY BATTERY MANUFACTURING METHOD**

(30) Priority: 02.10.2024 KR 20240133472
(71) Applicant: SAMSUNG SDI CO., LTD., Yongin-si, Gyeonggi-do 17084 (KR)
(72) Inventor: JUN, Pil Goo, 16678 Suwon-si, Gyeonggi-do (KR); LEE, Jun Sub, 16678 Suwon-si, Gyeonggi-do (KR)
(74) Representative: Michalski Hüttermann & Partner Patentanwälte mbB

(57) **Abstract**

An electrode manufacturing apparatus includes an electrode plate transfer device configured to transfer an electrode plate in a first direction while supporting the electrode plate, with the electrode plate including a first region in which an active material layer is formed and a second region, in which the active material layer is not formed. The electrode manufacturing apparatus also including a camera configured to acquire an image of the electrode plate supported by the electrode plate transfer device and an electrode tab placement device that is configured to place an electrode tab in the second region, with the electrode tab placement device being movable in a second direction intersecting the first direction. The electrode manufacturing apparatus further includes a processor configured (i) to determine a placement position at which the electrode tab is to be placed using the image and (ii) to adjust a position of the electrode tab placement device in the second direction so that the electrode tab is placed at the determined placement position.

## Description

### CROSS-REFERENCE TO RELATED APPLICATION

The present application claims priority to and the benefit of Korean Patent Application No. 10-2024-0133472, filed on October 02, 2024, in the Korean Intellectual Property Office.

### BACKGROUND

### Technical Field

The present disclosure relates to an electrode manufacturing apparatus, an electrode manufacturing method, and a secondary battery manufacturing method.

### Description of the Related Art

Unlike a primary battery that cannot be recharged, a secondary battery can be recharged and discharged. Low-capacity secondary batteries may be used for portable small-sized electronic devices, such as smartphones, feature phones, notebook computers, digital cameras, and camcorders. High-capacity secondary batteries are widely used as a power source for driving a motor in hybrid vehicles or electric vehicles and a power storage battery. A secondary battery includes a positive electrode and a negative electrode, an electrode assembly including the electrodes, a case that accommodates the electrode assembly, and electrode terminals connected to the electrode assembly.

As technology advances, secondary batteries with high capacity are more often required. To accommodate such needs, a plurality of secondary batteries may be electrically connected and used together. For example, a secondary battery module including a plurality of secondary batteries, and/or a secondary battery pack including a plurality of secondary battery modules may be used in electronic devices. Such electronic devices may be the type that require high power and/or high capacity, such as an electric vehicle or the like.

Secondary batteries typically include a stack-type electrode assembly in which positive electrode plates, separators, and negative electrode plates are alternately stacked. The positive electrode plate and the negative electrode plate each include a substrate and an active material layer provided on at least one surface of the substrate. The substrate of each of the positive electrode plate and the negative electrode plate may be formed of conductive metal materials such as aluminum (Al) or copper (Cu). But the metallic substrate is relatively heavy, which goes against a goal of weight reduction of the secondary battery.

Depending on the embodiment of the secondary battery, electrode tabs (a positive electrode tab and a negative electrode tab) may be bonded and connected to the positive and negative electrode plates. In addition, if necessary both the positive and negative electrode tabs may further include lead tabs (a positive electrode lead tab and a negative electrode lead tab) to extend their length and/or to electrically connect with an external device. In the manufacture of electrodes for secondary batteries, it is necessary to accurately place and bond the electrode tabs and the lead tabs in correct positions.

The above-described information disclosed in the background technology of the present disclosure is merely intended to improve understanding of the background of the present disclosure and thus may include information that does not form the related art.

### SUMMARY

The present disclosure is directed to providing an electrode manufacturing apparatus, an electrode manufacturing method, and a secondary battery manufacturing method, allowing electrode tabs to be placed and bonded in correct positions.

However, the problems to be solved by the present disclosure are not limited to the above-mentioned problems, and other problems not mentioned can be clearly understood by those skilled in the art from the following description.

According to an aspect of the present disclosure, there is provided an electrode manufacturing apparatus including an electrode plate transfer device configured to transfer an electrode plate in a first direction while supporting the electrode plate, the electrode plate including a first region, in which an active material layer is formed and a second region, in which the active material layer is not formed, a camera configured to acquire an image of the electrode plate supported by the electrode plate transfer device, an electrode tab placement device configured to place an electrode tab in the second region, the electrode tab placement device being movable in a second direction transversing the first direction, and a processor configured (i) to determine a placement position at which the electrode tab is to be placed using the image, and (ii) to adjust a position of the electrode tab placement device in the second direction so that the electrode tab is placed at the determined placement position.

According to another aspect of the present disclosure, there is provided an electrode manufacturing method including an image acquisition step of acquiring an image of an electrode plate, with the electrode plate including a first region in which an active material layer is formed and a second region in which the active material layer is not formed, and a placement step of placing an electrode tab at a predetermined placement position in the second region of the electrode plate, wherein in the placement step, the electrode tab is positionally adjusted in a second direction transversing the first direction so as to be placed at the placement position determined using the image.

According to still another aspect of the present disclosure, there is provided a method of manufacturing a secondary battery, including an electrode manufacturing process that manufactures an electrode of the secondary battery, and the electrode manufacturing process comprising an image acquisition step of acquiring an image of an electrode plate being transferred in a first direction, the electrode plate including a first region in which an active material layer is formed and a second region in which the active material layer is not formed, and is transferred in a first direction, and a placement step of placing an electrode tab at a predetermined placement position in the second region of the electrode plate, wherein in the placement step, the electrode tab is positionally adjusted in a second direction transversing the first direction so as to be placed at the placement position determined using the image.

### BRIEF DESCRIPTION OF THE DRAWINGS

The drawings appended to the present specification illustrate exemplary embodiments of the present disclosure, and the technical idea of the present disclosure will be more clearly understood from the accompanying drawings together with the following description of the disclosure. But the present disclosure is not limited to the embodiments shown in the drawings.
FIG. 1 is a view of a pouch-type secondary battery according to an embodiment of the present disclosure;
FIG. 2 is a view of the pouch-type secondary battery according to an embodiment of the present disclosure;
FIG. 3A is a plan view of an electrode according to an embodiment;
FIG. 3B is a cross-sectional view taken along line AA' of FIG. 3A;
FIG. 3C is a cross-sectional view taken along line BB' of FIG. 3A;
FIG. 4 is a plan view of an electrode according to another embodiment;
FIG. 5 is a view of an electrode manufacturing apparatus according to one embodiment of the present disclosure; and
FIG. 6 is a flowchart of an electrode manufacturing method according to an embodiment of the present disclosure.

### DETAILED DESCRIPTION

Hereinafter, exemplary embodiments of the present disclosure will be described in detail with reference to the accompanying drawings. Prior to this, the terms or words used in the present specification and claims should not be construed as being limited to ordinary or dictionary meanings and should be construed as meanings and concepts consistent with the technical idea of the present invention based on the principle that an inventor can appropriately define concepts and terms to explain the invention of the inventor in the best way. Therefore, the embodiments described herein and the configuration illustrated in the drawings are only the most preferred some embodiments and are not representative of the full the technical idea of the present invention, and thus, it should be understood that various equivalents and modifications may be made at the time of filing the present application.

Further, when used in the present specification, "comprise/include" and/or "comprising/including" may specify the presence of described shapes, numbers, steps, operations, members, elements, and/or groups thereof and may not exclude the presence or addition of one or more other shapes, numbers, steps, operations, members, elements, and/or groups thereof.

Further, to aid in understanding the invention, the accompanying drawings may be illustrated not as actual scales. Rather, sizes of some components may be exaggerated. In addition, the same reference numerals may be assigned to the same components in different embodiments.

The description that two objects for comparison are "the same" as each other may denote that they are "substantially the same" as each other. Thus, the range of the expression "substantially the same" may include a case of having a deviation considered as a low degree, for example, a deviation within 5%. In addition, the description that a certain parameter is the same in a certain region may denote that the parameter is the same from an average perspective.

Terms including ordinals such as first and second may be used to describe various components, but, of course, the components are not limited by the terms. These terms are merely used to distinguish one component from another. Unless particularly described as the opposite, a first component may also be a second component.

Throughout the specification, unless particularly described otherwise, each component may be provided in a singular number or a multiple number.

Arrangement of any configuration on an "upper portion (or lower portion)" of a component or "on (or below)" the component may mean not only any configuration may be disposed to be in contact with an upper surface (or lower surface) of the component but also that another configuration may be interposed between the component and any configuration disposed on (or below) the component.

Further, when a certain component is described as being "on," "connected to," or "coupled to" another component, it should be understood that these components may be directly connected or coupled to each other, but it is also possible that other components are "interposed" between them, or that each component may be "connected," "coupled," or "coupled" through other components.

As used herein, the term "and/or" includes any one and any combination of any two or more of the associated listed items. In addition, when describing embodiments of the present disclosure, the use of "may" refers to "one or more embodiments of the present disclosure." Expressions such as "at least one of," when preceding a list of elements, modify the entire list of elements and do not modify the individual elements of the list.

Throughout the specification, "A and/or B" may denote A or B, or A and B, unless particularly otherwise described, and "C to D" may denote C or greater to D or less, unless particularly otherwise described.

When phrases such as "at least one of A, B, and C," "at least one of A, B, or C," at least one selected from the group consisting of A, B, and C," and "at least one selected from A, B, and C" are used to specify a list of elements A, B, and C, these phrases may refer to any suitable combination of these elements.

The term "use" may be considered synonymous with the term "utilize." As used herein, the terms "substantially," "about," and other similar terms are used as terms of approximation and not as terms of degree, and these terms are utilized to account for inherent deviations in measured or calculated values that would be recognized by one of ordinary skill in the art.

Although terms such as first, second, third, and the like may be used herein to describe various elements, components, regions, layers, and/or sections, these elements, components, regions, layers, and/or sections are not limited by these terms. These terms are used to distinguish one element, component, region, layer, or section from another element, component, region, layer, or section. Therefore, a first element, first component, first region, a first layer, or first section described below may be referred to as a second element, a second component, a second region, a second layer, or a second section without departing from the disclosure of exemplary embodiments.

Spatially relative terms, such as "beneath," "below," "lower," "above," "upper," and the like may be used herein for convenience of explanation to describe one element or feature's relationship to another element(s) or feature(s) illustrated in the drawings. The spatially relative positions are to be understood as encompassing other orientations of a device in use or operation, in addition to the orientations depicted in the drawings. For example, when the device in the drawings is turned over, an element described as "below" or "under" another element may be understood as being "above" or "on top of" another element. Thus, the term "below" may encompass both orientations of above and below.

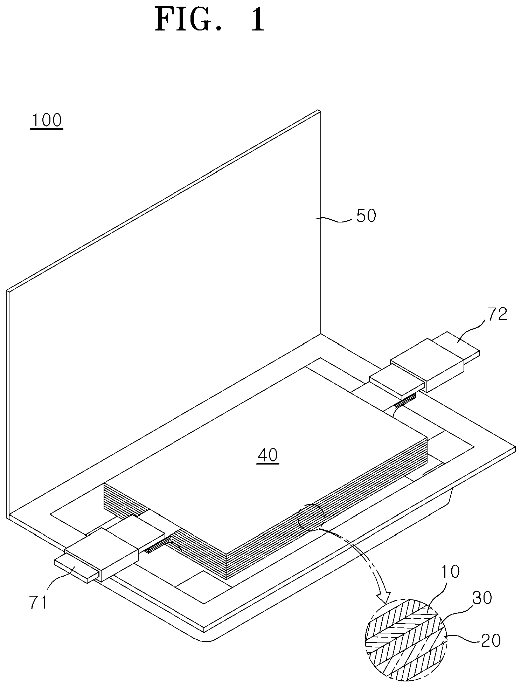

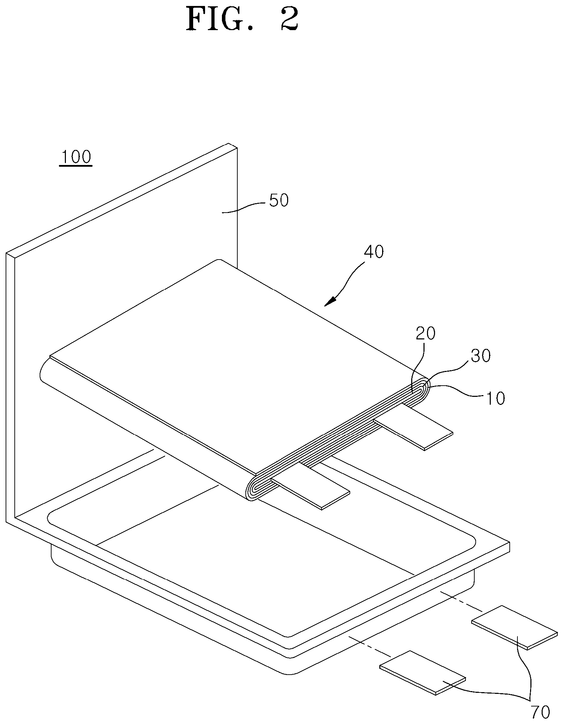

FIGS. 1 and 2 are perspective views of a secondary battery according to an embodiment of the present disclosure.

### Secondary battery 100

A secondary battery 100 may be classified as cylindrical, prismatic, pouch-type, and coin-type batteries based on its shape. FIGS. 1 and 2 illustrate an example of a pouch-type secondary battery. Referring to FIGS 1 and 2, the secondary battery 100 may include an electrode assembly 40 including a separator 30 interposed between a positive electrode 10 and a negative electrode 20, and a case 50 in which the electrode assembly 40 is accommodated. The positive electrode 10, the negative electrode 20, and the separator 30 may be impregnated with an electrolyte (not shown). In addition, the secondary battery 100 may include electrode tabs 70, that is, a positive electrode tab 71 and a negative electrode tab 72, which serve as electrical paths for inducing a current formed in the electrode assembly 40 to outside of the secondary battery 100.

### Positive electrode active material

As a positive electrode active material, a compound (lithiated intercalation compound) that is capable of reversible intercalation and deintercalation of lithium may be used. Specifically, one or more of a composite oxide of lithium and a metal selected from cobalt, manganese, nickel, and a combination thereof may be used.

The composite oxide may be a lithium-transition metal composite oxide, and specific examples thereof may include lithium nickel-based oxide, lithium cobalt-based oxide, lithium manganese-based oxide, lithium iron phosphate-based compound, cobalt-free nickel-manganese-based oxide, or a combination thereof.

As an example, compounds represented by any one of the following chemical formulas may be used. LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O_{2-α}D_{α} (0.90≤a≤1.8, 0≤b≤0.5, 0≤c≤0.5, 0<α<2); LiₐNi_{1-6-c}Mn_{d}X_{c}O_{2-α}D_{α} (0.90≤a≤1.8, 0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); and LiₐFePO₄ (0.90≤a≤1.8). In theses chemical formulas, A is Ni, Co, Mn, or a combination thereof; X is Al, Ni, Co, Mn, Cr, Fe, Mg, Sr, V, a rare-earth element or a combination thereof; D is O, F, S, P, or a combination thereof; G is Al, Cr, Mn, Fe, Mg, La, Ce, Sr, V, or a combination thereof; and L¹ is Mn, Al, or a combination thereof.

As an example, the positive electrode active material may be a high-nickel-based positive electrode active material having a nickel content of greater than or equal to 80 mol %, greater than or equal to 85 mol %, greater than or equal to 90 mol %, greater than or equal to 91 mol %, or greater than or equal to 94 mol % and less than or equal to 99 mol % based on 100 mol % of the metal excluding lithium in the lithium-transition metal composite oxide. The high-nickel-based positive electrode active material may be capable of realizing high capacity and can be applied to high-capacity and high-density secondary batteries.

### Positive electrode 10

The positive electrode 10 for the secondary battery 100 may include a current collector and a positive electrode active material layer formed on the current collector. The positive electrode active material layer includes a positive electrode active material and may further include a binder and/or a conductive material.

The positive electrode may further include an additive that can serve as a sacrificial positive electrode.

An amount of the positive electrode active material may be 90 wt% to 99.5 wt% based on 100 wt% of the positive electrode active material layer, and an amount of each of the binder and the conductive material may be 0.5 wt% to 5 wt% based on 100 wt% of the positive electrode active material layer.

The binder serves to adhere positive electrode active material particles to each other and also to adhere the positive electrode active material to the current collector well. Representative examples of the binder include polyvinyl alcohol, carboxylmethyl cellulose, hydroxypropyl cellulose, diacetyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, styrene-butadiene rubber, (meth)acrylated styrene-butadiene rubber, an epoxy resin, a (meth)acrylic resin, a polyester resin, nylon, or the like. But the present disclosure is not limited to these examples.

The conductive material is used to provide conductivity to the electrode, and any material that does not cause a chemical change in the battery and is electrically conductive may be used in the configured battery. Examples of the conductive material include a carbon-based material such as natural graphite, artificial graphite, carbon black, acetylene black, ketjen black, carbon fibers, carbon nanofibers, or carbon nanotubes; a metal-based material in the form of a metal powder or metal fiber including copper, nickel, aluminum, silver, or the like; a conductive polymer such as a polyphenylene derivative; or a mixture thereof.

Aluminum may be used as the current collector, but the present invention is not limited thereto.

### Negative electrode active material

A negative electrode active material may include a material capable of reversible intercalation and deintercalation of lithium ions, a lithium metal, a lithium metal alloy, a material capable of doping and dedoping lithium, or a transition metal oxide.

The material capable of reversible intercalation and deintercalation of lithium ions may be a carbon-based negative electrode active material, and may include, for example, crystalline carbon, amorphous carbon, or a combination thereof. Examples of the crystalline carbon include graphite such as amorphous, plate shape, flake, spherical shape or fiber-shaped natural graphite or artificial graphite. Examples of the amorphous carbon include soft carbon or hard carbon, a mesophase pitch carbonized product, calcined coke, and the like.

The lithium metal alloy may be an alloy of lithium and a metal selected from Na, K, Rb, Cs, Fr, Be, Mg, Ca, Sr, Si, Sb, Pb, In, Zn, Ba, Ra, Ge, Al, and Sn.

A Si-based negative electrode active material or a Sn-based negative electrode active material may be used as the material capable of doping and dedoping lithium. The Si-based negative electrode active material may include silicon, a silicon-carbon composite, SiOₓ (0<x<2), a Si-Q alloy or a combination thereof. In the formula Si-Q, Q is selected from an alkali metal, an alkaline-earth metal, a Group 13 element, a Group 14 element (excluding Si), a Group 15 element, a Group 16 element, a transition metal, a rare-earth element, and a combination thereof. The Sn-based negative electrode active material may be Sn, SnO₂, a Sn-based alloy, or a combination thereof.

The silicon-carbon composite may be a composite of silicon and amorphous carbon. According to an embodiment, the silicon-carbon composite may be in the form of silicon particles and amorphous carbon coated on the surface of the silicon particles. For example, the silicon-carbon composite may include a secondary particle (core) in which silicon primary particles are agglomerated and an amorphous carbon coating layer (shell) positioned on the surface of the secondary particle. The amorphous carbon may also be positioned between the silicon primary particles, such that, for example, the silicon primary particles are coated with amorphous carbon. The secondary particles may be dispersed in an amorphous carbon matrix.

The silicon-carbon composite may further include crystalline carbon. For example, the silicon-carbon composite may include a core including crystalline carbon and silicon particles and an amorphous carbon coating layer positioned on the surface of the core.

The Si-based negative electrode active material or the Sn-based negative electrode active material may be used by being mixed with a carbon-based negative electrode active material.

### Negative electrode 20

The negative electrode 20 for the secondary battery 100 includes a current collector and a negative electrode active material layer positioned on the current collector. The negative electrode active material layer includes a negative electrode active material and may further include a binder and/or a conductive material.

The negative electrode active material layer may include 90 wt% to 99 wt% of the negative electrode active material, 0.5 wt% to 5 wt% of the binder, and 0 wt% to 5 wt% of the conductive material.

The binder serves to adhere negative electrode active material particles to each other and also to adhere the negative electrode active material to the current collector. A non-aqueous binder, an aqueous binder, a dry binder, or a combination thereof may be used as the binder.

The non-aqueous binder may include polyvinylchloride, carboxylated polyvinylchloride, polyvinylfluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be selected from styrene-butadiene rubber, (meth)acrylated styrene-butadiene rubber, (meth)acrylonitrile-butadiene rubber, (meth)acrylic rubber, butyl rubber, fluororubber, a polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenolic resin, an epoxy resin, polyvinyl alcohol, and a combination thereof.

When the aqueous binder is used as the negative electrode binder, a cellulose-based compound capable of imparting viscosity can be further included. As the cellulose-based compound, one or more of carboxymethyl cellulose, hydroxypropylmethyl cellulose, methyl cellulose, or alkali metal salts thereof may be used in combination. Na, K, or Li can be used as the alkali metal.

The dry binder is a polymer material capable of being fiberized, and may be, for example, polytetrafluoroethylene, polyvinylidene fluoride, a polyvinylidene fluoride-hexafluoropropylene copolymer, a polyethylene oxide, or a combination thereof.

The conductive material is used to provide conductivity to the electrode, and any material that does not cause a chemical change in the battery and is electrically conductive may be used in the configured battery. Specific examples of the conductive material may include a carbon-based material such as natural graphite, artificial graphite, carbon black, acetylene black, ketjen black, carbon fibers, or carbon nanofibers; a metal-based material in the form of a metal powder or metal fiber including copper, nickel, aluminum, silver, or the like; a conductive polymer such as a polyphenylene derivative; or a mixture thereof.

The negative electrode current collector may be selected from a copper foil, a nickel foil, a stainless steel foil, a titanium foil, a nickel foam, a copper foam, a polymer substrate coated with a conductive metal, and a combination thereof.

### Electrolyte

The electrolyte for the secondary battery 100 includes a non-aqueous organic solvent and a lithium salt.

The non-aqueous organic solvent serves as a medium through which ions taking part in the electrochemical reaction of a battery can move.

The non-aqueous organic solvent may be a carbonate-based, ester-based, ether-based, ketone-based, alcohol-based solvent, aprotic solvent, or a combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), ethylmethyl carbonate (MEC), ethylene carbonate (EC), propylene carbonate (PC), butylene carbonate (BC), and the like.

The ester-based solvent may include methyl acetate, ethyl acetate, n-propyl acetate, dimethyl acetate, methyl propionate, ethyl propionate, decanolide, mevalonolactone, valerolactone, caprolactone, and the like.

The ether-based solvent may include dibutyl ether, tetraglyme, diglyme, dimethoxyethane, 2-methyltetrahydrofuran, 2,5-dimethyltetrahydrofuran, tetrahydrofuran, and the like. In addition, the ketone-based solvent may include cyclohexanone and the like. The alcohol-based solvent may include ethyl alcohol, isopropyl alcohol, and the like, and the aprotic solvent may include nitriles such as R-CN (where R is a C2 to C20 linear, branched, or cyclic hydrocarbon group and includes a double bond, an aromatic ring, or an ether bond), and the like; amides such as dimethyl formamide; dioxolanes such as 1,3-dioxolane and 1,4-dioxolane; sulfolanes; and the like.

The non-aqueous organic solvents may be used alone or in combination of two or more.

In addition, when a carbonate-based solvent is used, a cyclic carbonate and a chain carbonate may be mixed and used, and the cyclic carbonate and the chain carbonate may be mixed in a volume ratio of 1:1 to 1:9.

The lithium salt is a material that is dissolved in the organic solvent and serves as a source of lithium ions in a battery, enables a basic operation of a secondary battery, and improves the movement of the lithium ions between positive and negative electrodes. Representative examples of the lithium salt may include LiPF₆, LiBF₄, LiSbF₆, LiAsF₆, LiClO₄, LiAlO₂, LiAlCl₄, LiPO₂F₂, LiCl, LiI, LiN(SO₃C₂F₅)₂, Li(FSO₂)₂N (lithium bis(fluorosulfonyl)imide, LiFSI), LiC₄F₉SO₃, LiN(CₓF₂ₓ₊₁SO₂)(C_{y}F_{2y+1}SO₂) (where, x and y are integers of 1 to 20), lithium trifluoromethane sulfonate, lithium tetrafluoroethanesulfonate, lithium difluorobis(oxalato)phosphate (LiDFOB), and lithium bis(oxalato) borate (LiBOB).

### Separator 30

Depending on the type of the secondary battery 100, the separator 30 may be present between the positive electrode 10 and the negative electrode 20. The separator 30 may include polyethylene, polypropylene, polyvinylidene fluoride, or a multilayer film of two or more layers thereof, and of course, may also include a mixed multilayer film such as a polyethylene/polypropylene two-layer separator, a polyethylene/polypropylene/polyethylene three-layer separator, a polypropylene/polyethylene/polypropylene three-layer separator, or the like.

The separator 30 may include a porous substrate and a coating layer including an organic material, an inorganic material, or a combination thereof positioned on one surface or both surfaces of the porous substrate.

The porous substrate may be a polymer film formed of a polymer, or a copolymer or a mixture of two or more selected from polyolefins such as polyethylene, polypropylene, and the like, polyesters such as polyethylene terephthalate, polybutylene terephthalate, and the like, polyacetal, polyamide, polyimide, polycarbonate, polyetheretherketone, polyaryletherketone, polyetherimide, polyamideimide, polybenzimidazole, polyether sulfone, a polyphenylene oxide, a cyclic olefin copolymer, polyphenylene sulfide, polyethylene naphthalate, glass fibers, Teflon, and polytetrafluoroethylene.

The organic material may include a polyvinylidene fluoride-based polymer or a (meth)acrylic-based polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof. But the present invention is not limited to these examples.

The organic and inorganic materials may be present by being mixed in a coating layer or may be present in a form in which a coating layer including organic materials and a coating layer including inorganic materials are stacked.

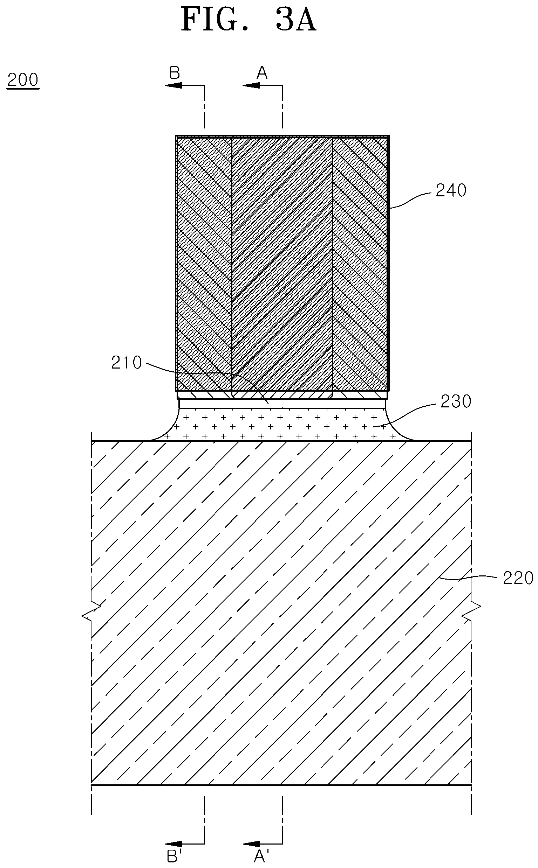

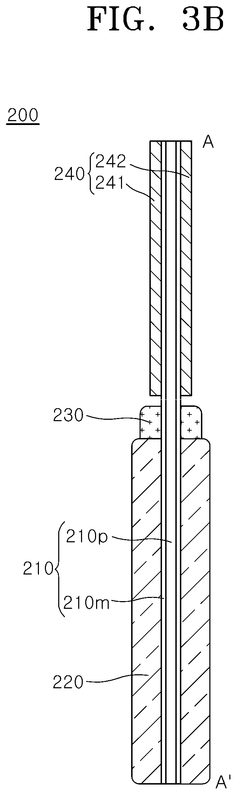

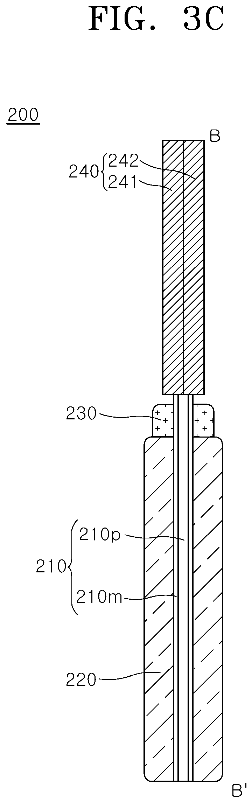

FIG. 3A is a plan view of an electrode according to an embodiment, and FIGS. 3B and 3C are cross-sectional views taken along lines AA' and BB' of FIG. 3A, respectively. Referring to FIGS. 3A to 3C, an electrode 200 includes a substrate 210, an active material layer 220, and a connection tab 240. The electrode 200 may be manufactured using an electrode manufacturing apparatus according to an embodiment of the present disclosure, which will be described later.

The substrate 210 performs the same or a similar function as the current collector described with reference to FIGS. 1 and 2. That is, the substrate 210 allows a current to flow through an electrode (such as the positive electrode 10 or the negative electrode 20 described in FIGS. 1 and 2). The substrate 210 provides a path for electrons to move to the active material layer (for example, including the coating layer described in FIGS. 1 and 2), which is formed on the substrate 210, through conduction and/or current collection. To this end, the substrate 210 may include an electrically conductive material. For example, the substrate 210 may include a member formed of metal.

The substrate 210 includes an insulating layer 210p and a conductive layer 210m. Hereinafter, the substrate 210 including the insulating layer 210p and the conductive layer 210m may be referred to as a composite substrate. As shown in FIG. 3A, the substrate 210 may have an elongated shape extending in a direction (a horizontal direction in FIG. 3A) intersecting a direction in which the connection tab 240 is bonded to the substrate 210.

The insulating layer 210p enables the shape of the substrate 210 to be supported. The insulating layer 210p enables the substrate 210 to maintain its shape, even when, for example, the conductive layer 210m is thin.

The insulating layer 210p may be formed of an insulating material with a lower density than the conductive layer 210m. As such, the insulating layer 210p allows the weight of the substrate 210 to be reduced as compared to when a substrate is formed of only a conductive layer.

The insulating material may include at least of polymer materials and polymer composite materials.

The polymer materials may be, for example, polyamide, polyethylene terephthalate, polyimide, polyethylene, polypropylene, polystyrene, polyvinyl chloride, aramid, polyphthalamide, acrylonitrile-butadiene-styrene copolymer, polybutylene terephthalate, poly-p-phenylene terephthalamide, ethylene-propylene rubber, polyoxymethylene, epoxy resin, phenolic resin, polytetrafluoroethylene, polyphenylene sulfide, polyvinylidene fluoride, silicone rubber, polycarbonate, cellulose and derivatives thereof, starch and derivatives thereof, protein and derivatives thereof, polyvinyl alcohol and crosslinked products thereof, and polyethylene glycol and crosslinked products thereof.

The polymer composite materials are composite materials that include the polymer material and inorganic materials. The inorganic materials include, for example, ceramic materials, glass materials, ceramic composites, and the like.

The conductive layer 210m performs conduction and/or current collection on the substrate 210. Through this, the conductive layer 210m provides a path for electrons to move to the active material layer. The conductive layer 210m may be formed of a conductive material. The conductive material may include, for example, a metal material, a carbon-based material, and a combination thereof.

The metal material may include, for example, silver (Ag), copper (Cu), gold (Au), aluminum (Al), tungsten (W), zinc (Zn), nickel (Ni), iron (Fe), platinum (Pt), tin (Sn), and alloys of at least two or more of these metals. The metal material may be selected based on the polarity of the electrode. For example, when the electrode is a negative electrode, the metal material may include aluminum, and when the electrode is a positive electrode, the metal material may include copper. The carbon-based material may include at least one of, for example, graphite, carbon nanotubes, and graphene.

The conductive layer 210m may be provided on at least one surface of the insulating layer 210p. That is, the conductive layer 210m may be formed on one surface of the insulating layer 210p, or the conductive layer 210m may be formed on each of opposite surfaces of the insulating layer 210p. When the conductive layers 210m is formed on opposite surfaces of the insulating layer 210p, those surfaces are insulated from each other by the insulating layer 210p.

As described above, by including the insulating layer 210p, which is lighter than the conductive layer 210m, the weight of the substrate 210 can be reduce. Thus, the substrate 210 can contribute to a goal of reducing the weight of the secondary battery 100.

By including the insulating layer 210p, the substrate 210 can prevent other components from passing therethrough. The insulating layer 210p has a higher stretch than the conductive layer 210m. Because of this property, the substrate 210 can improve short-circuit resistance in a nail penetration test through the stretch of the insulating layer 210p positioned internally. Further, by including the insulating layer 210p, the substrate 210 can reduce voltage drop and resistance, thereby providing for a safer secondary battery.

The active material layer 220 includes an active material and a conductive material, and the active material layer may also include a binder. The active material layer 220 is provided on the substrate 210. The active material layer 220 may be coated in a slurry state on a portion of the substrate 210. As an alternative, the active material layer 220 may be attached in a freestanding film state on a portion of the substrate 210.

The active material layer 220 is provided on a portion of the substrate 210. For example, the active material layer 220 may be provided on a portion of one surface of the substrate 210. In other embodiments, as shown in FIGS. 3B and 3C, the active material layer 220 may include a first active material layer and a second active material layer, which are provided on opposite surfaces of the substrate 210. In this case, the first active material layer and the second active material layer may be disposed symmetrically with respect to the substrate 210. However, the first active material layer and the second active material layer may be provided in different areas.

The active material layer 220 may be provided on the conductive layer 210m. For example, the active material layer 220 may include the first active material layer formed on a first conductive layer and the second active material layer formed on a second conductive layer. The active material layer 220 may be provided on a portion of at least one surface of the substrate 210. Another portion of the substrate 210 may be exposed and not be covered by the active material layer 220. In some examples, the first conductive layer and the second conductive layer may be exposed. An exposed region of the substrate 210 exposed provides a space that may be electrically connected to another structure.

The connection tab 240 may be a portion of the electrode tab. The connection tab 240 electrically connects the first conductive layer and the second conductive layer, which are insulated from each other in the substrate 210 by the insulating layer 210p. Accordingly, in the connection tab 240, currents from the two conductive layers 210m converge.

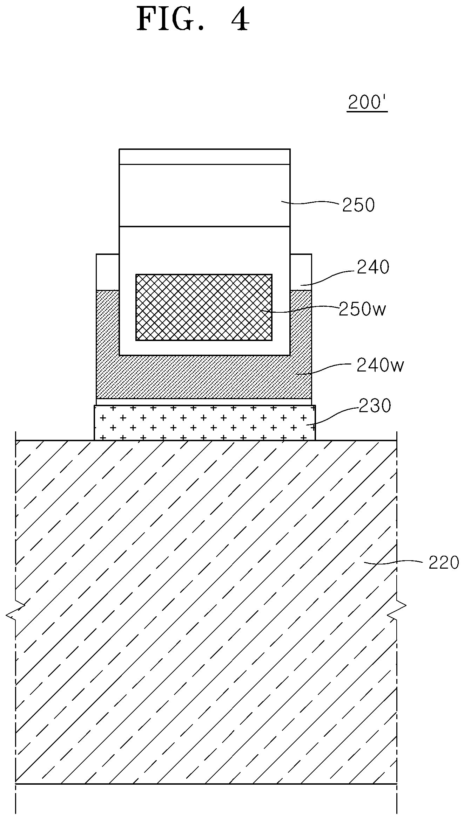

The connection tab 240 is electrically connected to the conductive layer 210m. For example, the connection tab 240 may be welded to the conductive layer 210mby a welded portion 240w (see FIG. 4). The welded portion 240w may be, for example, a region in which the connection tab 240 and the substrate 210 are welded and bonded to each other. Alternatively, the welded portion 240w may be, for example, a region in which the connection tab 240 and another connection tab 240 are welded and bonded. The welded portion 240w may be formed to extend from a region in which the connection tabs 240 are provided on opposite surfaces of the substrate 210 to a region in which only the connection tabs 240 come into contact with each other.

The connection tab 240 may electrically connect the first conductive layer and the second conductive layer. For example, the connection tab 240 may include a first connection tab coupled to the first conductive layer and a second connection tab coupled to the second conductive layer. In an embodiment, the first connection tab is connected to the first conductive layer on a first side and in contact with the second connection tab on a second side. Similarly, the second connection tab is connected to the second conductive layer on a first side and in contact with the first connection tab on a second side. Thus, as shown in FIG. 3C, the first connection tab and the second connection tab are in contact with each other, allowing the connection tab 240 to electrically connect the first conductive layer and the second conductive layer.

The connection tab 240 includes a conductive material. For example, the connection tab 240 may include the same or similar material as the conductive layer 210m.

The electrode 200 may further a protective layer 230. The protective layer 230 may be formed between the active material layer 220 and the conductive layer 210m. The protective layer 230 may prevent the conductive layer 210m from being deformed and/or from cracking. To this end, the protective layer 230 may include an insulating material. The insulating material may be, for example, aluminum oxide, aluminum hydroxide, and the like. In addition, the protective layer 230 may further include a binder.

FIG. 4 is a plan view of an electrode according to another embodiment. Referring to FIG. 4, an electrode 200' includes the substrate, the active material layer 220, the connection tab 240, and a lead tab 250. The electrode 200' may be manufactured using the electrode manufacturing apparatus according to the embodiment of the present disclosure, which will be described later. The electrode 200' of FIG. 4 is different from the electrode 200 of FIGS. 3A to 3C in that the lead tab 250 is further included.

The lead tab 250 may be electrically connected through the connection tab 240 to the substrate of the electrode 200', more specifically, to the conductive layer of the substrate. For the electrical connection with the connection tab 240, the lead tab 250 may be welded through a welded portion250w onto and electrically connected to the connection tab 240. The lead tab 250 may be formed of a conductive material and may be formed of the same material as the connection tab 240, but the present disclosure is not limited thereto.

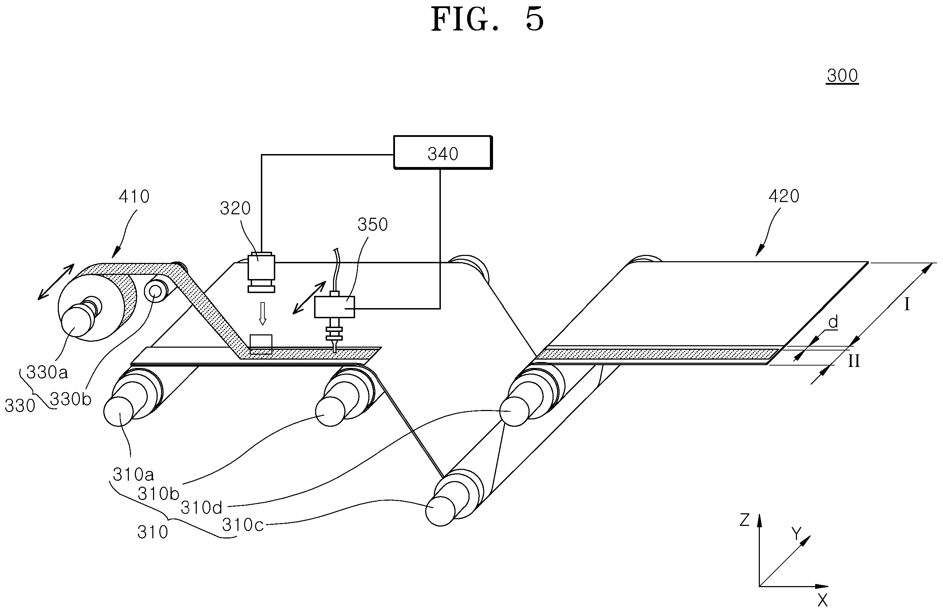

FIG. 5 is a view of an electrode manufacturing apparatus according to an embodiment of the present disclosure. Referring to FIG. 5, an electrode manufacturing apparatus 300 includes an electrode plate transfer device 310, a camera 320, an electrode tab placement device 330, and a processor 340. In this case, the electrode manufacturing apparatus 300 may be an apparatus that places an electrode tab 410 at a predetermined placement position on an electrode plate 420. The electrode manufacturing apparatus 300 may further include a bonding device 350. In this case, the electrode manufacturing apparatus 300 may be configured for placing an electrode tab 410 at the predetermined placement position on the electrode plate 420 and for bonding the electrode tab 410 to the electrode plate 420 at a predetermined bonding position.

The electrode plate transfer device 310 is for transferring the electrode plate 420 in one direction, for example, in an X-axis direction (a first direction). The electrode plate transfer device 310 may continuously transfer the electrode plate 420 at a constant or variable speed. In this case, processing of the electrode plate (for example, an electrode tab placement process and/or an electrode tab bonding process to be described later) may be performed while transferring the electrode plate 420. Alternatively, the electrode plate transfer device 310 may be a device that transfers a predetermined amount of the electrode plate 420, performs a process while the electrode plate transfer device 310 is stopped, and continue transferring the electrode plate 420 after completing the process.

According to the present disclosure, the type or configuration of the electrode plate transfer device 310 is not particularly limited. More specifically, the electrode plate transfer device 310 may continuously transfer the electrode plate 420 or selectively transfer and stop transferring of the electrode plate 420 to perform a process of placing and bonding the electrode tab 410 on the electrode plate 420.

As shown in FIG. 5, the electrode plate transfer device 310 may be configured as a combination of a plurality of transfer rollers 310a, 310b, 310c, and 310d arranged in a transfer direction (the X-axis direction). Here, as will be apparent to those skilled in the art, the number, arrangement positions, and separation distance of the plurality of transfer rollers 310a, 310b, 310c, and 310d shown in FIG. 5 are exemplary.

The electrode plate transfer device 310 may be a device that supports and transfers the electrode plate 420 to enable an electrode tab placing and bonding process (which will be described later) to be performed. For example, the electrode plate transfer device 310 may have a component that supports the electrode plate 420 between at least a first transfer roller 310a and a second transfer roller 310b. Here, supporting the electrode plate 420 is sufficient when the electrode plate 420 is supported enough to avoid substantial bending at a pressed portion, even when a predetermined pressure is applied to the electrode plate 420 upward or downward (i.e., in a Z-axis direction) during subsequent processes. Thus, the electrode plate transfer device 310 does not necessarily have a component that physically supports a lower surface of the electrode plate 420. That is, there is no particular limitation on a specific method by which the electrode plate transfer device 310 supports the electrode plate 420. For example, as shown in FIG. 5, by arranging a third transfer roller 310c and a fourth transfer roller 310d in combination with the first and second transfer rollers 310a and 310b, tension is applied to stretch the electrode plate 420 in the X-axis direction, thereby ensuring that the electrode plate 420 is supported between the first transfer roller 310a and the second transfer roller 310b. Alternatively, the electrode plate 420 (in particular, a portion of the electrode plate 420 to which the electrode tab 410 is to be bonded) may be supported between the first transfer roller 310a and the second transfer roller 310b using a support member from below the electrode plate 420. That is, the electrode plate transfer device 310 may further include the support member.

The type of the electrode plate transferred by the electrode plate transfer device 310 is not limited. For example, the electrode plate 420 may be either a positive electrode plate or a negative electrode plate. In addition, a substrate constituting the electrode plate 420 may be a conventional substrate entirely formed of a conductive material, or the composite substrate as described above with reference to FIGS. 3A to 3C and FIG. 4. As described above, a composite substrate includes an insulating layer, a first conductive layer formed on one surface of the insulating layer, and a second conductive layer formed on the other surface of the insulating layer.

The electrode plate 420 has a first region I in which an active material layer is formed and a second region II in which the active material layer is not formed. The first and second regions I and II may be formed on one or both surfaces. Typically, the second region II may be positioned at either one edge or both edges of the first region I. Here, one or both edges of the first region I may refer to the edges of the first region I in a direction intersecting the first direction (the X-axis direction), i.e., in a Y-axis direction (a second direction).

The electrode tab 410 may be bonded in the second region II by the electrode tab placing and bonding process, which will be described later. In this case, the electrode tab 410 is bonded to a position apart from the first region I by a predetermined distance d. If the distance d is too small, the electrode tab 410 may become electrically connected to the active material layer of the first region I, which may cause defects. On the other hand, if the distance d is too large, the electrode tab may protrude outward from the second region II of the electrode plate, which may also cause defects. The range of the distance d is not limited and may be determined based on a total width of the electrode plate 420 (a length of the electrode plate in the Y-axis direction), a width of the first region I, a width of the second region, a width of the electrode tab, and the like.

The electrode tab 410 may be placed and bonded across the entirety of the second region II in the X-axis direction. Alternatively, the electrode tab 410 may be placed and bonded over a predetermined length in the X-axis direction, with a plurality of electrode tabs 410 placed and bonded at predetermined intervals.

According to an aspect of the present disclosure, the electrode tab 410 placed and bonded in the second region II may include, for example, the connection tab described with reference to FIGS. 3A to 3C. In this case, the electrode plate 420 may include an insulating layer, a first conductive layer formed on a first surface of the insulating layer, and a second conductive layer formed on a second surface of the insulating layer. In addition, the electrode tab 410 may be a connection tab that connects the first conductive layer and the second conductive layer.

According to another aspect of the present disclosure, the electrode tab 410 placed and bonded in the second region II may include, for example, the lead tab described with reference to FIG. 4. In this case, the electrode plate 420 may include an insulating layer, a first conductive layer formed on a first surface of the insulating layer, a second conductive layer formed on a second surface of the insulating layer, and a connection tab that connects the first conductive layer and the second conductive layer. In addition, the electrode tab 410 may include a lead tab that extends the connection tab.

The camera 320 acquires an image of the electrode plate 420 supported by the electrode plate transfer device 310. The type of camera 320 is not limited as long as it is capable of acquiring images of the electrode plate. The camera 320 may be configured to acquire still images or videos.

The camera 320 may be installed above the electrode plate transfer device 310 in a Z-axis direction and may acquire images by capturing an image of an upper surface of the electrode plate 420. The camera 320 may be capable of capturing the entirety or a portion of the upper surface of the electrode plate 420. In the latter case, the camera 320 may be installed to acquire an image including at least a boundary between the first region I and the second region II.

The electrode tab placement device 330 is a device for placing the electrode tab 410 in the second region II of the electrode plate 420. More specifically, the electrode tab placement device 330 may place the electrode tab 410 in the second region II at a predetermined distance d from the first region I. In the second region II, the position at which the electrode tab 410 is placed (placement position), that is, the distance d from the first region I, may be determined by the processor 340 (which will be described later).

According to the present disclosure, the type or configuration of the electrode tab placement device 330 is not limited. More specifically, the electrode tab placement device 330 may be a device that continuously supplies and places the electrode tab 410 in the second region II of the electrode plate. Or the electrode tab placement device 330 may supply and place electrode tabs 410, each having a predetermined length, at regular intervals to perform the process of placing and adhering the electrode tab 410 onto the electrode plate 420.

As shown in FIG. 5, the electrode tab placement device 330 may include one or more rollers 330a and 330b above the electrode plate transfer device 310 at positions corresponding to the second region II of the electrode plate 420. Here, a first roller 330a may be a device for mounting a roll of electrode tabs 410, and a second roller 330b may be a portion of a device that places the electrode tab 410 supplied from the first roller 330a into the second region II. As will be apparent to those skilled in the art, the number, arrangement positions, intervals, and the like of a plurality of rollers 330a and 330b shown in FIG. 5 are exemplary.

According to the present disclosure, the electrode tab placement device 330 may be a device that is movable in at least the Y-axis direction (the second direction). For example, the plurality of rollers 330a and 330b may be installed on a fixed support (not shown) to be movable in the Y-axis direction using a linear motor or the like. Alternatively, the first roller 330a may be fixed, but the roll of electrode tabs 410 mounted thereon may be movable in the Y-axis direction. Regardless of the configuration, by moving the electrode tab placement device 330 in the Y-axis direction, the position at which the electrode tab 410 is attached to the second region II, that is, the distance from the first region I, may be adjusted.

The processor 340 determines the placement position at which the electrode tab 410 is to be placed using the image acquired by the camera 320. To this end, the processor 340 may be connected to the camera 320 and may receive an image of the electrode plate 420 from the camera 320. In addition, the processor 340 may process the received image to identify a predetermined reference position on the electrode plate 420. Here, the reference position refers to a position that is used as a reference in determining the position at which the electrode tab 410 is to be placed in the second region II of the electrode plate 420. According to the present embodiment, since the electrode tab 410 is placed in the second region II that is spaced from the first region I by the predetermined distance d, the reference position may be a position related to the boundary between the first region I and the second region II.

As an example, the reference position may be a boundary line between the first region I and the second region II. To this end, the processor 340 may process or analyze the received image to detect the boundary line between the first region I and the second region II and, based on this, determine the placement position for the electrode tab 410.

In another example, the boundary line between the first region I and the second region II may correspond to an edge of the active material layer formed in the first region I. In such a case, the processor 340 may detect the edge of the active material layer based on a luminance difference between the first region I, which has an active material layer, and the second region II, which does not have the active material layer. However, the present disclosure is not limited thereto, and the processor 340 may apply various image analysis algorithms for identifying the target to detect the edge of the active material layer.

In yet another example, the boundary line between the first region I and the second region II may be determined by a mark that is pre-printed on the electrode plate 420. In this case, the processor 340 may detect the mark included in the image and determine a position corresponding to a position of the mark as the boundary line. The mark is not limited in type so long as it can be easily detected by the processor 340 through image analysis.

The processor 340 may determine the placement position at which the electrode tab 410 is to be placed in the second region II based on the identified reference position. As an example, the processor 340 may determine the placement position to be spaced from the identified boundary line by the predetermined distance d.

As described above, in the embodiment of the present disclosure, the reference position is detected from the image of the electrode plate 420 and, based on the detected reference position, the placement position at which the electrode tab 410 is to be placed is determined. Accordingly, even when a positional deviation of the electrode plate occurs (particularly in the Y-axis direction) due to external factors, impacts, or internal vibrations of the electrode plate transfer device 310 during the transfer of the electrode plate 420 by the electrode plate transfer device 310, the electrode tab 410 can be spaced apart from the first region I, i.e., the active material layer, by the predetermined distance d.

The processor 340 can move the electrode tab placement device 330 in the Y-axis direction to align the determined placement position of the electrode tab 410 with an actual position (a provided position) of the electrode tab 410 provided by the electrode tab placement device 330, when the determined placement position is different from the actual position. For example, when a distance between the placement position and the provided position is greater than the predetermined distance d, the processor 340 may move the electrode tab placement device 330 so that the provided position becomes closer to the first region I. On the other hand, when the distance between the placement position and the provided position is less than the predetermined distance d, the processor 340 may move the electrode tab placement device 330 so that the provided position is further from the first region I.

According to an aspect of the present disclosure, the processor 340 may be a computing device capable of reading a computer program and performing processing based on a predetermined algorithm. Here, the computer program may be recorded on a computer-readable storage medium or may be accessed through a network. The type of computing device is not limited in the present disclosure.

The bonding device 350 is provided to bond the electrode tab 410 to the electrode plate 420. More specifically, the bonding device 350 may bond the electrode tab 410 to the electrode plate 420 at a position (bonding position) on the electrode plate 420, that is, at a position on the electrode tab 410 placed on the electrode plate 420.

According to the present disclosure, the type and configuration of the bonding device 350 is not particularly limited. The bonding device 350 may include, for example, a welding device for bonding the electrode tab 410 placed on the electrode plate 420 to the electrode plate 420. The welding device may be a laser welding device or an ultrasonic welding device, but the present disclosure is not limited thereto.

According to the present embodiment, the bonding device 350 may be a device that is movable in at least the Y-axis direction (the second direction). For example, the bonding device 350 may include a welding device installed on a fixed support (not shown) and be movable in the Y-axis direction using a linear motor or the like. As the bonding device 350 moves in the Y-axis direction, the position at which the electrode tab is bonded, for example, the distance from the first region I, may be adjusted.

The processor 340 may identify a predetermined reference position on the electrode plate 420 using the image acquired from the camera 320. Here, the reference position refers to a position that is used as a reference in determining the position at which the electrode tab 410 is to be bonded in the second region II of the electrode plate 420. According to the present disclosure, since the electrode tab 410 is bonded in the second region II that is spaced apart from the first region I by a predetermined distance, the reference position may be a position related to the boundary between the first region I and the second region II, and may be the same as the reference position described above with respect to the placement position.

The processor 340 also may determine the bonding position at which the electrode tab is to be bonded in the second region II based on the identified reference position. As an example, the processor 340 may determine the bonding position to be spaced apart from the identified boundary line by the predetermined distance. Here, the distance of the bonding position may be greater than the distance d of the placement position described above.

According to the present disclosure, the electrode tab 410 bonded in the second region II may be bonded to the electrode plate 420 by a welded portion formed at the bonding position.

As an example, the welded portion may include the welded portion 240w described above with reference to FIGS. 3a to 3c. In this case, the electrode plate may include an insulating layer, a first conductive layer formed on one surface of the insulating layer, and a second conductive layer formed on the other surface of the insulating layer. In addition, the electrode tab may be a connection tab that connects the first conductive layer and the second conductive layer. As another example, the welded portion may include the welded portion 250w described above with reference to FIG. 4. In this case, the electrode plate may include an insulating layer, a first conductive layer formed on one surface of the insulating layer, a second conductive layer formed on the other surface of the insulating layer, and a connection tab that connects the first conductive layer and the second conductive layer. In addition, the electrode tab may include a lead tab that extends the connection tab.

As described above, in the embodiment of the present disclosure, the reference position is detected from the image of the electrode plate, and based on the detected reference position, the bonding position at which the electrode tab is to be bonded is determined. Accordingly, even if a positional deviation of the electrode plate occurs (particularly in the Y-axis direction) due to external factors, impacts, or internal vibrations of the electrode plate transfer device 310 during the transfer of the electrode plate by the electrode plate transfer device 310, the electrode tab can be bonded at a position spaced apart from the first region I, i.e., the active material layer, by the certain distance d2.

The processor 340 may move the bonding device 350 in the Y-axis direction so that the bonding position is moved in correspondence with the distance that the electrode tab placement device 330 has moved in the Y-axis direction. For example, when the electrode tab placement device 330 is moved closer to the first region I, the processor 340 may move the bonding device 350 closer to the first region I. On the other hand, when the electrode tab placement device 330 is moved farther away from the first region I, the processor 340 may also move the bonding device 350 farther away from the first region I.

Next, an electrode manufacturing method according to an embodiment of the present disclosure will be described.

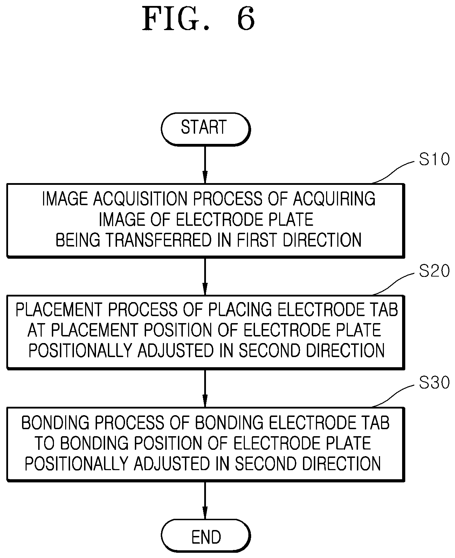

FIG. 6 is a flowchart illustrating an example of the electrode manufacturing method according to an embodiment of the present disclosure. Hereinafter, a case in which the electrode manufacturing method of FIG. 6 is performed using the electrode manufacturing apparatus 300 shown in FIG. 5 will be described. Accordingly, for details that are not specifically described below in relation to the electrode manufacturing method, those described above with reference to FIG. 5 may be applied. However, the following description does not limit the secondary battery manufacturing method according to the present disclosure to being performed only using the electrode manufacturing apparatus 300 shown in FIG. 5.

Referring to FIGS. 5 and 6, an image acquisition process of acquiring an image of an electrode plate 420 being transferred is first performed (S10). The image of the electrode plate 420 may be acquired using the camera 320.

The electrode plate 420 may be transferred in one direction, for example, in the X-axis direction (the first direction) by the electrode plate transfer device 310. The electrode plate 420 may be continuously transferred at a constant or variable speed, and, in each case, an image of the electrode plate 420 being transferred may be acquired. Alternatively, the electrode plate 420 may be transferred by a predetermined distance and then stopped for a predetermined period of time, during which an image of the stationary electrode plate 420 may be acquired.

The type of the electrode plate 420 transferred in this process S10 is not limited. For example, the electrode plate 420 may be either a positive electrode plate or a negative electrode plate. In addition, a substrate constituting the electrode plate 420 may be a conventional substrate entirely formed of a conductive material, or the composite substrate described above with reference to FIGS. 3A to 3C and FIG. 4.

In addition, the electrode plate 420 may include a region (a first region I) in which an active material layer is formed and a region (a second region II) in which the active material layer is not formed. The regions I and II may be formed on one or both surfaces of the electrode plate 420. An electrode tab 410 may be placed and bonded in the second region II by an electrode tab placing and bonding process.

According to an aspect of the present disclosure, the electrode tab 410 placed and bonded in the second region II may include, for example, the connection tab as described above with reference to FIGS. 3A to 3C. In this case, the electrode plate 420 may include an insulating layer, a first conductive layer formed on a first surface of the insulating layer, and a second conductive layer formed on a second surface of the insulating layer. The electrode tab 410 may connect the first conductive layer and the second conductive layer.

According to another aspect of the present disclosure, the electrode tab 410 placed and bonded in the second region II may include, for example, a lead tab as described above with reference to FIG. 4. In such a case, the electrode plate 420 may include an insulating layer, a first conductive layer formed on a first surface of the insulating layer, a second conductive layer formed on a second surface of the insulating layer, and a connection tab that connects the first conductive layer and the second conductive layer. The electrode tab 410 may include a lead tab that extends the connection tab.

Next, a process of placing the electrode tab 410 at a placement position of the second region II of the electrode plate is performed (S20). In this operation, the electrode tab 410 may be placed in the second region II at a predetermined distance d from the first region I. In addition, the electrode tab 410 may be positioned in the Y-axis direction (the second direction) from the second region II and then placed.

The placement position may be determined using a reference position in the image acquired in the image acquisition process (S10). The image may first be processed to identify a predetermined reference position on the electrode plate 420. As an example, the reference position may be a boundary line between the first region I and the second region II, and the boundary line between the first region I and the second region II may correspond to an edge of the active material layer formed in the first region I. As another example, the boundary line between the first region I and the second region II may be determined by a mark that is pre-printed on the electrode plate 420. Based on the identified reference position, the position at which the electrode tab 410 is placed may be determined.

As described above, in the embodiment of the present disclosure, the reference position is detected from the image of the electrode plate 420, and based on the reference, the position at which the electrode tab 410 is to be placed is determined. Accordingly, even if a deviation of the electrode plate 420 occurs (particularly in the Y-axis direction) due to external factors, impacts, or internal vibrations of the electrode plate transfer device 310 during the transfer of the electrode plate by the electrode plate transfer device 310, the electrode tab 410 can be spaced from the first region I, i.e., the active material layer, by the predetermined distance d.

In the placement process (S20), when the determined placement position of the electrode tab 410 is different from a provided position of the electrode tab 410, the provided position of the electrode tab 410 may be adjusted to match the provided position with the placement position. For example, the provided position of the electrode tab 410 may be moved in the Y-axis direction.

Next, a process of bonding the electrode tab 410, which is placed at the placement process (S20), to the electrode plate 420 is performed at a predetermined bonding position (S30). In this operation, the electrode tab 410, which is placed in the second region II at the predetermined distance d from the first region I during the placement process (S20), is bonded at the predetermined bonding position. In addition, the bonding position may be repositioned in the second region II in the Y-axis direction (the second direction), if necessary.

The bonding position may also be determined using a reference position in the image acquired in the image acquisition process (S10). To this end, the image may first be processed to identify a predetermined reference position on the electrode plate 420. As an example, the reference position may be the boundary line between the first region I and the second region II, and the boundary line between the first region I and the second region II may correspond to the edge of the active material layer formed in the first region I. As another example, the boundary line between the first region I and the second region II may be determined by the mark that is pre-printed on the electrode plate 420. Based on the identified reference position, the bonding position at which the electrode tab 410 is to be bonded may be determined.

As described above, in the embodiment of the present disclosure, the reference position is detected from the image of the electrode plate 420, and based on this, the position at which the electrode tab 410 is to be bonded is determined. Accordingly, in correspondence with the electrode tab 410 being repositioned during the Y-axis direction in the placement process (S20), the bonding position may also be moved.

According to an embodiment of the present disclosure, when an electrode tab 410 to be bonded to an electrode plate 420 is misaligned, the position of the electrode tab 410 can be adjusted and bonded to the electrode plate 420, thereby enabling precise positioning and bonding of the electrode tab 410 with respect to the electrode plate 420.

However, it will be appreciated by persons skilled in the art that the effects that can be achieved through the present disclosure are not limited to what has been described hereinabove and other advantages of the present disclosure will be more clearly understood from the following detailed description.

Although the embodiments of the present disclosure have been described with reference to the drawings, it would be understood that they are merely examples and various modifications and equivalents thereof may be made by one of ordinary skill in the art.

## Claims

1. An electrode manufacturing apparatus (300) comprising:
an electrode plate transfer device (310) configured to transfer an electrode plate (420) in a first direction while supporting the electrode plate (420), the electrode plate (420) including a first region (I) in which an active material layer (220) is formed and a second region (II) in which the active material layer (220) is not formed;
a camera (320) configured to acquire an image of the electrode plate (420) supported by the electrode plate transfer device (310);
an electrode tab placement device (330) configured to place an electrode tab (410) in the second region (II), the electrode tab placement device (330) being movable in a second direction transversing the first direction; and
a processor (340) configured (i) to determine a placement position at which the electrode tab (410) is to be placed using the image and (ii) to adjust a position of the electrode tab placement device (330) in the second direction so that the electrode tab (410) is placed at the determined placement position.

2. The electrode manufacturing apparatus (300) of claim 1, wherein the processor (340) is configured to process the image to identify a reference position on the electrode plate (420) and to determine the placement position based on the identified reference position.

3. The electrode manufacturing apparatus (300) of claim 2, wherein the processor (340) is configured to determine the placement position to be spaced apart from the reference position by a distance.

4. The electrode manufacturing apparatus (300) according to any of claims 2 or 3, wherein the electrode plate includes an insulating layer (210p), a first conductive layer (210m) formed on a first surface of the insulating layer (210p), and a second conductive layer (210m) formed on a second surface of the insulating layer (210p),
wherein the electrode tab (410) includes a connection tab (240) that electrically connects the first conductive layer (210m) and the second conductive layer (210m), and
wherein the reference position corresponds to a boundary line of the first region (I) in a direction of the connection tab (240).

5. The electrode manufacturing apparatus (300) according to any of the preceding claims, wherein the processor (340) is configured to identify the reference position using a mark displayed on an edge of the active material layer (220) or the electrode plate (420).

6. The electrode manufacturing apparatus (300) according to any of claims 2 or 3, wherein the electrode plate (420) includes an insulating layer (210p), a first conductive layer (210m) formed on one surface of the insulating layer (210p), a second conductive layer (210m) formed on the other surface of the insulating layer (210p), and a connection tab (240) that electrically connects the first conductive layer (210m) and the second conductive layer (210m),
wherein the electrode tab (410) includes a lead tab (250) that extends the connection tab (240), and
wherein the reference position corresponds to a boundary line of the connection tab (240) in a direction of the lead tab (250).

7. The electrode manufacturing apparatus (300) according to any of the preceding claims, further comprising a bonding device (350) that is configured to bond the electrode tab (410) to the electrode plate (420), the bonding device (350) movable in the second direction,
wherein the processor (340) is configured to determine a bonding position at which the electrode tab (410) is to be bonded using the image and to adjusts a position of the bonding device (350) so that the electrode tab (420) is bonded at the bonding position.

8. An electrode manufacturing method, preferably performed by an electrode manufacturing apparatus (300) configured according to any of claims 1 to 7, comprising:
an image acquisition step of acquiring an image of an electrode plate (420) being transferred in a first direction, with the electrode plate (420) including a first region (I) in which an active material layer (220) is formed and a second region (II) in which the active material layer (220) is not formed; and
a placement step of placing an electrode tab (410) at a predetermined placement position in the second region (II) of the electrode plate (420),
wherein in the placement step, the electrode tab (410) is positionally adjusted in a second direction intersecting the first direction so as to be placed at the placement position determined using the image.

9. The electrode manufacturing method of claim 8, wherein, in the placement step, the image is processed to identify a reference position on the electrode plate (420) and the placement position is determined based on the reference position.

10. Use of an electrode manufacturing method according to any of claims 8 or 9 in a method of manufacturing a secondary battery (100) to manufacture an electrode of the secondary battery (100).
